# EUROPÄISCHE PATENTSCHRIFT

(11) **EP 3 875 899 B1**
(45) Veröffentlichungstag und Bekanntmachung des Hinweises auf die Patenterteilung: **04.05.2022**
(21) Anmeldenummer: 20161279.3
(22) Anmeldetag: 05.03.2020
(51) Int. Cl.: G01B 21/04

(54) **VERFAHREN, COMPUTERPROGRAMMPRODUKT UND VORRICHTUNG ZUR UNTERSTÜTZUNG EINES BENUTZERS BEI EINER ERSTELLUNG EINES MESSPLANS UND/ODER BEI EINER STEUERUNG EINER DURCHZUFÜHRENDEN MESSUNG**
METHOD, COMPUTER PROGRAM PRODUCT AND DEVICE FOR ASSISTING A USER IN THE CREATION OF A MEASUREMENT PLAN AND / OR FOR CONTROLLING A MEASUREMENT TO BE PERFORMED
PROCÉDÉ, PRODUIT-PROGRAMME D'ORDINATEUR ET DISPOSITIF D'AIDE À UN UTILISATEUR À LA CRÉATION D'UN PLAN DE MESURE ET/OU À LA COMMANDE D'UNE MESURE À EFFECTUER

(43) Veröffentlichungstag der Anmeldung: 08.09.2021
(73) Patentinhaber: Carl Zeiss Industrielle Messtechnik GmbH, 73447 Oberkochen (DE)
(72) Erfinder: Ritter, Markus, 89520 Heidenheim (DE); Neumaier, Kilian, 89520 Heidenheim (DE); Hersacher, Steffen, 73430 Aalen (DE)
(74) Vertreter: Witte, Weller & Partner Patentanwälte mbB

(56) Entgegenhaltungen:
- EP-A1- 2 881 704
- DE-A1-102008 049 567
- FR-A1- 2 860 900
- US-A1- 2016 261 791

## Beschreibung

Die vorliegende Erfindung betrifft ein Verfahren und eine Vorrichtung zur Unterstützung eines Benutzers bei einer Erstellung eines Messplans für eine mit einem Messgerät durchzuführende Messung und/oder bei einer Steuerung der mit dem Messgerät durchzuführenden Messung. Ferner betrifft die vorliegende Erfindung ein Computerprogrammprodukt, mit Hilfe dessen das erfindungsgemäße Verfahren auf einem Computer ausführbar ist. Sowohl die Messplanung als auch die Steuerung erfolgen in der Praxis zumeist softwarebasiert.

Dimensionelle Messgeräte, für die eine solche softwarebasierte Planung und Steuerung des Messablaufes eingesetzt wird, sind beispielsweise Koordinatenmessgeräte oder Mikroskope. Rauigkeitsmessgeräte oder andere Messgeräte zum Messen von Abständen und/oder Oberflächeneigenschaften eines Objektes werden ebenso als dimensionelle Messgeräte im vorliegenden Sinne verstanden.

Koordinatenmessgeräte mit taktilen und/oder optischen Messsensoren werden in der dimensionellen Messtechnik verwendet, um die Form einer Werkstückoberfläche beispielsweise durch Abtastung zu bestimmen. Da die dimensionelle Messtechnik im Regelfall in Industriezweigen Anwendung findet, in denen sehr hohe Genauigkeiten, beispielsweise für nachfolgende Bearbeitungsschritte oder zur Qualitätssicherung erforderlich sind, ist eine fehlerfreie Messdurchführung von großer Wichtigkeit.

Mikroskope (z.B. Rasterelektronenmikroskope (REM) oder Rasterkraftmikroskope (RKM)) werden dazu verwendet, beispielsweise die Oberfläche eines Werkstücks im Zuge der Qualitätskontrolle unter einer starken Vergrößerung anzusehen oder bildlich darzustellen. Die betrachteten Oberflächen weisen beispielsweise Strukturen auf, deren Größenordnung unterhalb des Auflösungsvermögens eines menschlichen Auges, teilweise auf atomarer Ebene, liegt. Mikroskopische Messgeräte werden bevorzugt in den Bereichen der Biotechnologie, Medizin und den Materialwissenschaften eingesetzt.

Um einen reproduzierbaren, fehlerfreien Messablauf mittels dieser Messgeräte zu gewährleisten, ist eine möglichst detaillierte Planung und Steuerung des Messablaufs notwendig. Bei der Erstellung eines Messplans, der auch als Prüfplan bezeichnet wird, wird von einem Benutzer eine Vielzahl von Messpfaden an und um ein zu vermessendes Objekt bspw. mittels einer Software-Applikation definiert. Zu jedem Messpfad legt der Benutzer zudem verschiedene Messparameter und maschinenbezogene Steuerparameter in Form von Einstellparametern an. Diese Einstellparameter können bspw. eine Anzahl von anzufahrenden Messpunkten an einem Messelement, eine festzulegende Messrichtung und/oder eine Messgeschwindigkeit sein.

Eine Software-Applikation, mittels derer die Erstellung von Messplänen, die Steuerung der Messgeräte und die Verarbeitung der erhaltenen Messergebnisse möglich ist, wird beispielsweise von der Carl Zeiss Industrielle Messtechnik GmbH unter der Bezeichnung CALYPSO angeboten. Die Grundlagen von CALYPSO sind beispielsweise in einer Broschüre mit dem Titel "Einfache Messung und was Sie dazu wissen sollten - Eine Fibel der Messtechnik" (Bestellnummer bei Carl Zeiss: 61212-2400101) oder in einer Werbebroschüre der Carl Zeiss Industrielle Messtechnik GmbH mit dem Titel "CALYPSO einfach Programmieren" (Publikationsnummer 60-11-068) beschrieben.

Die Erstellung des Messablaufs mit der Software CALYPSO erfolgt anhand von sog. Prüfmerkmalen. Prüfmerkmale repräsentieren dimensionelle Eigenschaften eines oder mehrerer geometrischer Elemente (sog. Messelemente) an einem Messobjekt.

Beispielhafte Messelemente sind Bohrungen im Messobjekt, ein Zylinderabschnitt am Messobjekt, eine Kante des Messobjektes, eine Außen- oder Innenfläche des Messobjektes oder ein charakteristischer Punkt auf der Oberfläche des Messobjektes, etc.

Beispielhafte Prüfmerkmale sind: Ein räumlicher Abstand zwischen zwei Punkten, ein räumlicher Abstand zwischen zwei Geraden/Kanten, ein räumlicher Abstand zwischen zwei Ebenen, ein räumlicher Abstand eines Punktes von einer Geraden oder einer Ebene, ein räumlicher Abstand einer Geraden von einer Ebene, ein räumlicher Abstand einer Ebene, einer Geraden oder eines Punktes von einem Ursprung eines Koordinatensystems, eine Projektion eines räumlichen Abstandes auf eine Koordinatenachse, ein räumlicher Winkel, eine Projektion eines räumlichen Winkels in eine Koordinatenebene, eine Parallelität zweier Geraden oder Ebenen, eine Rechtwinkligkeit zweier Geraden oder Ebenen, eine Formabweichung eines Kreises, eines Kreissegments, einer Gerade, eines Rechtecks, eines Langlochs oder einer Ebene, ein Durchmesser oder ein Radius eines Kreises oder eines Kreissegments, eine Kurvenlänge, eine Kurvenform, eine Rundheit eines Kreises oder eines Kreissegments, eine Geradheit einer Gerade, eine Ebenheit einer Ebene und/oder eine Rauheit einer Fläche..

Um ein Prüfmerkmal eines Messelements zu quantifizieren, müssen in der Regel mehrere Messpunkte an jedem Messelement mit dem Messkopf angefahren und von diesem erfasst werden.

Zum Erstellen des Messablaufs legt der Benutzer typischerweise zunächst die zu messenden Messelemente am Messobjekt fest. Dabei legt der Benutzer in der Software beispielsweise anhand eines CAD-Modells des Messobjekts fest, welche geometrischen Elemente (Messelemente) des Messobjekts gemessen werden sollen. Beispielhaft legt der Benutzer einen Zylinder als Messelement per Menüauswahl an. Zu jedem Messelement definiert der Benutzer dann anhand von Einstellparametern, zumeist manuell, die geometrischen Eigenschaften des Messelements (bspw. Radius, Höhe, Breite, etc.).

Danach wählt der Benutzer beispielsweise die einzelnen, angelegten Messelemente mit Hilfe eines Cursors aus und selektiert diese durch Klick oder Doppelklick per Maus. In diesem Einstellmenü wählt der Benutzer aus einer Vielzahl von messelementbezogenen Einstellparametern einen oder mehrere Einstellparameter (bspw. eine Anzahl von Messpunkten und/oder eine Messgeschwindigkeit) aus und definiert zu jedem ausgewählten Einstellparameter einen konkreten Parameterwert.

Neben der Messplan-Erstellung legt der Benutzer zudem eine Vielzahl von steuerungsbezogenen Parametern, ebenfalls in Form von Einstellparametern, (beispielsweise für die Licht- und Maschinensteuerung) fest. So legt der Benutzer, beispielsweise im Rahmen der Maschinensteuerung, an dem Messobjekt einen oder mehrere Auflichtkreise mit jeweils bestimmten Kantenfindungsparametern an, um insbesondere bei optisch arbeitenden Koordinatenmessgeräten eine fehlerfreie Kantenfindung an dem Messobjekt zu gewährleisten.

Aufgrund der hohen Komplexität und der Vielzahl von Auswahlmöglichkeiten bei der Auswahl von Einstellparametern während der verschiedenen Messplanungs- und Steuerungsphasen entsteht für den Benutzer ein hoher zeitlicher Aufwand. Dieser hohe zeitliche Aufwand gepaart mit einem für die Messplanung und Steuerung benötigten Expertenwissen führt zu einem hohen Kostenfaktor, den es aus wirtschaftlicher Sicht zu reduzieren gilt.

Ein bereits heute verfügbarer Schritt in Richtung einer zeitlichen Optimierung der Planung von Mess- und Steuerungsabläufen für ein Messgerät besteht darin, dass dem Benutzer je nach momentanem Anwendungszweck eine oder mehrere Voreinstellungen für einen oder mehrere Einstellparameter softwareseitig zur Verfügung gestellt werden. Eine Möglichkeit, diese anwendungsbezogenen Voreinstellungen zu definieren, besteht darin, für jeden Einstellparameter die am häufigsten vorkommende Voreinstellung manuell und in Abhängigkeit des jeweiligen Anwendungszwecks festzulegen.

Nachteilig dabei ist, dass in einigen Fällen eine große Anzahl an möglichen und zugleich häufigen, potenziellen Voreinstellungen zur Verfügung steht oder in anderen Fällen diese Anzahl verhältnismäßig eingeschränkt ist. Somit kann nicht für jeden Anwendungszweck eine für den Benutzer sinnvolle Voreinstellung auf manuelle Art und Weise gewählt werden. Zudem ist das manuelle Definieren von Voreinstellungen wiederum mit einem, wenn auch nur initialen, zeitlichen Einstellaufwand verbunden.

Eine alternative Möglichkeit gegenüber der manuellen Definition von Voreinstellungen besteht darin, beispielsweise die innerhalb eines bestimmten Zeitintervalls zuletzt durch den Benutzer ausgewählten Einstellparameter und deren zugehörige Parameterwerte als Voreinstellungen festzuhalten, wodurch zumindest der zeitliche Aufwand zum Definieren der Voreinstellungen entfällt.

Allerdings hat auch diese Alternative einen Nachteil. Definiert der Benutzer beispielsweise in einem Sonderfall speziell für diesen Sonderfall geltende Einstellparameter und Parameterwerte, werden diese speziellen Einstellparameter softwareseitig als Voreinstellungen gespeichert, wodurch ansonsten häufige, von dem Benutzer gewählte Einstellparameter und Parameterwerte überschrieben werden und nicht mehr zur späteren Auswahl zur Verfügung stehen.

Aus der US 2016 261 791 A1 ist ein optisches Verschiebungsmesssystem, ein Verfahren zur Optimierung von Abbildungsbedingungen und ein Programm zur Optimierung von Abbildungsbedingungen bekannt, die das Einstellen einer optimalen Abbildungsbedingung erleichtern.

Es ist daher eine Aufgabe der vorliegenden Erfindung, ein Verfahren und eine Vorrichtung zur Unterstützung eines Benutzers bei einer Erstellung eines Messplans für eine mit einem Messgerät durchzuführende Messung und/oder bei einer Steuerung der mit dem Messgerät durchzuführenden Messung derart weiterzuentwickeln, dass ein zeitlicher Aufwand zur Erstellung eines Messplans und/oder zur Steuerung reduziert und die Erstellung für den Benutzer erleichtert wird.

Diese Aufgabe wird erfindungsgemäß gelöst durch ein Verfahren zur Unterstützung eines Benutzers bei einer Erstellung eines Messplans für eine mit einem dimensionellen Messgerät durchzuführende Messung und/oder bei einer Steuerung der mit dem Messgerät durchzuführenden Messung, wobei das Verfahren die folgenden Schritte aufweist:
- Bereitstellen des dimensionellen Messgerätes;
- Bereitstellen einer Vorrichtung zur Steuerung eines dimensionellen Messgerätes und zur Unterstützung eines Benutzers bei einer Erstellung eines Messplans für eine mit dem dimensionellen Messgerät durchzuführende Messung und/oder während der Messung bei der Steuerung der mit dem Messgerät durchzuführenden Messung;
- Empfangen einer Vielzahl von Einstellparametern, die von einem Benutzer bezüglich eines Mess- oder Steuerbefehls aus einer Vielzahl von Mess- oder Steuerbefehlen für die mit dem Messgerät durchzuführende Messung ausgewählt werden;
- Auswerten der Vielzahl von Einstellparametern auf Basis einer statistischen Auswertung und/oder einer Auswertung mittels maschinengestützten Lernens;
- Ermitteln einer Voreinstellung, durch die zumindest ein Einstellparameter der ausgewerteten Vielzahl von Einstellparametern dem Mess- oder Steuerbefehl zuordnet wird; und
- Ausgeben eines Einstellparameter-Vorschlags basierend auf der ermittelten Voreinstellung, wenn ein Eingabebefehl zur Selektion des Mess- oder Steuerbefehls empfangen wird.

Gemäß einem Aspekt der vorliegenden Erfindung wird die oben genannte Aufgabe durch eine Vorrichtung zur Steuerung eines dimensionellen Messgerätes und zur Unterstützung eines Benutzers bei einer Erstellung eines Messplans für eine mit dem dimensionellen Messgerät durchzuführende Messung und/oder zur Unterstützung eines Benutzers während der Messung bei der Steuerung der mit dem dimensionellen Messgerät durchzuführenden Messung gelöst, wobei die Vorrichtung ein Display und eine Auswerte- und Steuereinheit aufweist, wobei die Auswerte- und Steuereinheit über eine Datenverbindung mit dem Display verbunden ist und dazu eingerichtet ist:
- eine Vielzahl von Einstellparametern, die von einem Benutzer bezüglich eines Mess- oder Steuerbefehls aus einer Vielzahl von Mess- oder Steuerbefehlen für die mit dem Messgerät durchzuführende Messung ausgewählt werden, zu empfangen;
- die Vielzahl von Einstellparametern auf Basis einer statistischen Auswertung und/oder einer Auswertung mittels maschinengestützten Lernens auszuwerten;
- eine Voreinstellung, durch die zumindest ein Einstellparameter der ausgewerteten Vielzahl von Einstellparametern dem Mess- oder Steuerbefehl zuordnet wird, zu ermitteln; und
- einen Einstellparameter-Vorschlag basierend auf der ermittelten Voreinstellung auszugeben, wenn ein Eingabebefehl zur Selektion des Mess- oder Steuerbefehls empfangen wird.

Gemäß einem weiteren Aspekt wird die vorliegende Aufgabe erfindungsgemäß durch ein Computerprogrammprodukt gelöst, das einen Programmcode aufweist, der dazu eingerichtet ist, das oben genannte Verfahren auszuführen, wenn der Programmcode auf einem Computer ausgeführt wird.

Ein wesentlicher Vorteil des erfindungsgemäßen Verfahrens sowie der erfindungsgemäßen Vorrichtung besteht darin, dass Voreinstellungen nicht mehr manuell durch den Benutzer definiert werden müssen oder sich nicht mehr auf durch den Benutzer zuletzt getätigte Einstellungen beschränken. Somit sind die Voreinstellungen erfindungsgemäß nicht mehr auf einen vorher festgelegten Satz von Voreinstellungen beschränkt, sondern ergeben sich, vorzugsweise benutzerspezifisch, in (laufender) Anwendung des Verfahrens bzw. bei Benutzung der Vorrichtung durch den Benutzer.

Ein weiterer Vorteil ist, dass durch die erfindungsgemäße Ermittlung einer Voreinstellung benutzerbezogene Voreinstellungen ermittelt werden können, die an Präferenzen bzw. Anwendungsgewohnheiten des Benutzers angepasst sind und sich bei laufender Anwendung des Verfahrens vorzugsweise weiter an diese anpassen.

Durch das erfindungsgemäße Verfahren und die erfindungsgemäße Vorrichtung werden mit anderen Worten alle relevanten Benutzerinteraktionen während der Erstellung eines Messplans und/oder der Steuerung eines Messgeräts erfasst, ermittelt und ausgewertet, so dass die Ausgabe eines Einstellparameter-Vorschlags möglich ist.

Jedes Mal, wenn ein (bestimmter) Mess- oder Steuerbefehl ausgewählt wird, müsste der Benutzer eigentlich eine Vielzahl von Einstellparametern auswählen, was nun mit Hilfe des erfindungsgemäßen Verfahrens durch die Ermittlung einer spezifischen Voreinstellung bezüglich jedes Mess- oder Steuerbefehl vereinfacht wird. Zudem wird bei jedem (erneuten) Auswählen eines Mess- oder Steuerbefehls die zur Verfügung stehende Datenmenge für die statistische Auswertung und/oder die Auswertung mittels künstlicher Intelligenz erhöht, wodurch die Ermittlung der jeweiligen Voreinstellung stets exakter wird.

Insbesondere ist es von Vorteil, wenn die Auswertung der Vielzahl von Einstellparametern auf Basis von maschinengestütztem Lernen bzw. mittels künstlicher Intelligenz erfolgt, da dem Benutzer in einem solchen Fall gegenüber einer rein statistischen Auswertung das Erstellen von komplexen Auswertungsregeln erspart bleibt. Die vollkommen freie Erstellung von Regelsätzen bzw. Voreinstellungen, z.B. durch Machine Learning, ist also nicht zwingend erforderlich, aber von Vorteil, da das Erstellen von komplexen Regeln durch den Benutzer oder den Entwickler entfallen kann.

Die durch das erfindungsgemäße Verfahren ermittelten Voreinstellungen bezüglich der Mess- und Steuerbefehle der aktuellen Benutzerinteraktion werden erfindungsgemäß nicht automatisch als Einstellparameter übernommen, sondern dem Benutzer als Einstellparameter-Vorschlag ausgegeben bzw. angezeigt, der von dem Benutzer aktiv akzeptiert (beispielsweise Drücken eines OK-Buttons) oder abgelehnt (beispielsweise Drücken eines Abbrechen-Buttons) werden kann. Die Einstellungen, welche sich aus der Anwendung des Regelsatzes bzw. der Voreinstellungen im laufenden Kontext der aktuellen Benutzerinteraktion ergeben, werden also nicht automatisch angewendet, sondern dem Benutzer als Vorschlag angezeigt. Der Benutzer kann selbst entscheiden, ob dieser Vorschlag angewendet bzw. übernommen werden soll.

Das erfindungsgemäße Verfahren kann also vorzugsweise aus jeglicher Art von Benutzerinteraktion, die stets einem bestimmten Kontext zugeordnet werden kann, darauf schließen, was der Benutzer ausgehend von der jeweils getätigten Benutzerinteraktion voraussichtlich im nächsten Schritt machten möchte, und gibt für diese Vorhersage einen entsprechenden Einstellparameter-Vorschlag aus, der dem Benutzer eine softwareseitige Eingabe ersparen kann, wenn der Vorschlag angenommen wird. Das System lernt also vorzugsweise automatisch (bspw. mittels Reinforcement Learning) aus kontextsensitiven Benutzerinteraktionen, was der Benutzer für Einstell-, Ansicht- und/oder Eingabe-Präferenzen hat (oder approximiert welche er haben könnte), und ermittelt auf dieser Basis einen, vorzugsweise benutzer- und kontextspezifischen, Einstellparameter-Vorschlag.

Das Empfangen der Vielzahl von Einstellparametern kann erfindungsgemäß sowohl über ein Erfassen sämtlicher Benutzerinteraktionen, die der Benutzer beispielsweise per Mausklick oder Tastatur tätigt, oder auch durch Laden eines in einem Speicher gespeicherten Datensatzes erfolgen. Mit anderen Worten kann das Empfangen der Vielzahl von Einstellparametern sowohl bei laufender Anwendung des Verfahrens als auch im Voraus oder im Nachhinein per gespeicherten Datensatz erfolgen.

Zusätzlich zu dem auszugebenden Einstellparameter-Vorschlag kann der Benutzer weiterhin, falls gewünscht, manuelle Voreinstellungen vornehmen (beispielsweise wenn eine Sichtbarkeit einzelner Benutzeroberflächen (User Interfaces (UIs) eingestellt werden soll). Eine Notwendigkeit zur manuellen Voreinstellung besteht allerdings nicht.

Unter dem Begriff "Vielzahl" wird vorliegend zwei oder mehr verstanden.

Unter dem Begriff "Mess- oder Steuerbefehl" wird vorliegend jede Art von Benutzerinteraktion verstanden, die innerhalb eines gewissen Kontextes beim Erstellen eines Messplans und/oder zur Steuerung eines Messgerätes erfolgt. Mit anderen Worten kann unter dem Begriff "Mess- oder Steuerbefehl" beispielsweise eine zuletzt durch den Benutzer getätigte Eingabe (beispielsweise Anlegen eines Messelements, Definieren einer Größe eines Messelements, Anlegen einer Anzahl von Messpunkten an einem Messelement, etc.) verstanden werden. Zu jedem Kontext bzw. Mess- oder Steuerbefehl steht dem Nutzer eine Vielzahl von Einstellparametern zur Verfügung.

Als Messbefehl kann somit beispielsweise die Auswahl eines Menüpunktes innerhalb einer Messplan-Applikation (bspw. Menüpunkt "Anlegen von Messelementen") oder die Auswahl eines Untermenüpunktes (bspw. Menüpunkt "Anlegen eines Zylinders als Messelement") verstanden werden.

Unter dem Begriff "Einstellparameter" wird vorliegend jede mögliche Einstellfunktion bezüglich eines Mess- oder Steuerbefehls verstanden, die in der Messplan- und Steuerungsapplikation und/oder an dem Messgerät hardwareseitig zur Verfügung steht.

Die Anzahl der zu einem bestimmten Mess- oder Steuerbefehl zur Verfügung stehenden Einstellparameter variiert je nach Mess- oder Steuerbefehl. Um jedoch eine "sinnvolle" statistische Auswertung und/oder Auswertung per künstliche Intelligenz zu gewährleisten ist es vorteilhaft, wenn zumindest zwei Einstellparameter empfangen werden, die von dem Benutzer bezüglich eines (bestimmten) Mess- oder Steuerbefehls aus der Vielzahl von Mess- oder Steuerbefehlen ausgewählt wurden. Im Regelfall wird durch den Benutzer bei der Erstellung eines Messplans allerdings eine Vielzahl von Einstellparametern (bspw. > 5 Einstellparameter pro Mess- oder Steuerbefehl) ausgewählt.

Zudem sei erwähnt, dass die Auswertung mittels maschinengestützten Lernens jegliche Auswertungsmethoden umfasst, die in Verbindung mit einer künstlichen Intelligenz bzw. einem neuronalen Netzwerk bekannt sind, wobei beispielhaft das teilüberwachte Lernen (engl. semi-supervised learning), das bestärkende Lernen (engl. reinforcement learning), das aktive Lernen (engl. active learning) oder das selbstständige Lernen (engl. self-training) zu nennen ist. Ebenfalls ist auch ein unüberwachtes maschinengestütztes Lernen möglich.

Alle relevanten Benutzerinteraktionen mit dem Gesamtsystem werden also aufgezeichnet, wobei die Analyse bzw. Auswertung der aufgezeichneten Interaktionen dann statistisch und/oder durch maschinengestütztes Lernen erfolgt. Für eine festgelegte Menge an Einstellmöglichkeiten werden die von dem Benutzer gewählten Einstellungen also entweder statistisch ausgewertet und die jeweils am häufigsten gewählte Einstellung als die Voreinstellung ermittelt. Alternativ oder ergänzend kann für eine festgelegte Menge an Einstellmöglichkeiten die von dem Benutzer gewählten Einstellungen inklusive ihres Kontextes, in dem sie gewählt wurden, von einem intelligenten System, z.B. einem neuronalen Netz, ausgewertet werden. Für jede der ermittelten Einstellmöglichkeiten wird pro erkanntem, eindeutigen Kontext die wahrscheinlichste Voreinstellung gewählt. Es werden also alle vom Benutzer gewählten Einstellungen inklusive des Kontexts, in dem sie gewählt wurden, von dem intelligenten System ausgewertet. Das System bestimmt dann einen Satz von Regeln, welche je eine Einstellmöglichkeit inklusive ihres relevanten Kontexts und die wahrscheinlichste Voreinstellung umfasst.

In einer bevorzugten Ausgestaltung weist die Vielzahl von Einstellparametern jeweils Parameterwerte und/oder Informationen bezüglich des Mess- oder Steuerbefehls auf.

Unter dem Begriff "Parameterwerte" werden insbesondere numerische Parameterwerte bzw. die durch den Benutzer definierten Werte zu einem bestimmten Einstellparameter (beispielsweise ein Radius, eine Höhe, eine Länge, eine Breite eines Messelements) verstanden. Zudem kann unter dem Begriff "Parameterwerte" beispielsweise auch eine Worteingabe, die durch den Benutzer als Einstellparameter getätigt wird (beispielsweise Messrichtung "linksdrehend") verstanden werden.

Unter der Formulierung "Informationen bezüglich des Mess- oder Steuerbefehls" wird vorliegend verstanden, dass durch das erfindungsgemäße Verfahren vorzugsweise nicht nur konkrete Einstellparameterwerte (in Form von Zahlenwerten), wie z.B. eine Anzahl von Messpunkten oder eine Mess- oder Suchrichtung, sondern vorzugsweise auch Hintergrundinformationen bzw. Metadaten, wie beispielsweise eine Sichtbarkeit eines Benutzeroberfläche-Elementes oder ein auszuwählender Bildausschnitt aus einer 3D-Szene, bezüglich eines jeden Mess- oder Steuerbefehls empfangen und ausgewertet werden können, um eine jeweils benutzerspezifische Voreinstellung zu ermitteln. Zudem können auch hardwareseitige Informationen bezüglich jedes Mess- oder Steuerbefehls empfangen werden. Die Einstellungen, welche (bspw. durch maschinelles Lernen) erlernt bzw. ausgewertet werden, umfassen also nicht nur konkrete Parameterwerte, sondern auch weitere Informationen.

In einer weiteren bevorzugten Ausgestaltung wird bei der statistischen Auswertung eine Häufigkeitsverteilung ermittelt, in der jedem der empfangenen Vielzahl von Einstellparametern ein Häufigkeitswert zugeordnet wird.

Die Häufigkeitsverteilung wird vorzugsweise mit mathematisch bekannten Methoden der deskriptiven Statistik ggf. in Paarung mit textbasierten Auswerteverfahren erstellt, wobei vorzugsweise sowohl numerisch basierte als auch text-basierte Einstellparameter ausgewertet werden. Die Häufigkeitsverteilung, beispielsweise in Form einer Gaußschen-Glockenkurve, ist vorzugsweise auf die Vielzahl von Einstellparametern normiert.

In einer weiteren bevorzugten Ausgestaltung wird bei der Ermittlung der Voreinstellung der zumindest eine Einstellparameter der Vielzahl von Einstellparametern dem Mess- oder Steuerbefehl in Abhängigkeit der Häufigkeitsverteilung zugeordnet.

Mit anderen Worten wird für die Vielzahl von Einstellparametern bzw. für die Menge an Einstellmöglichkeiten jeweils die von dem Benutzer gewählte Vielzahl von Einstellparametern derart statistisch ausgewertet, dass jeweils die am häufigsten gewählten Einstellparameter als Voreinstellung ermittelt und dem Benutzer beim (erneuten) Selektieren des jeweiligen Mess- oder Steuerbefehls als Einstellparameter-Vorschlag ausgegeben werden. Es sei erwähnt, dass beispielsweise auch mehrere Einstellparameter, die bspw. einen gewissen Häufigkeitswert überschreiten, als Voreinstellung zu einem jeweiligen Mess- oder Steuerbefehl ermittelt werden können.

In einer weiteren bevorzugten Ausgestaltung wird bei der Auswertung mittels maschinengestützten Lernens eine Wahrscheinlichkeitsverteilung ermittelt, in der jedem der empfangenen Vielzahl von Einstellparametern ein Wahrscheinlichkeitswert zugeordnet wird.

Das maschinengestützte Lernen, beispielsweise implementiert als neuronales Netzwerk, kann vorzugsweise auf Grundlage einer historischen Betrachtung der von einem Benutzer zu einem jeweiligen Mess- oder Steuerbefehl ausgewählten Vielzahl von Einstellparametern für jeden einzelnen dieser Einstellparameter einen Wahrscheinlichkeitswert ermitteln. Dieser Wahrscheinlichkeitswert gibt vorzugsweise an, wie wahrscheinlich es sein wird, dass der Benutzer einen bestimmten Einstellparameter bezüglich eines bestimmten Mess- oder Steuerbefehls bei einer zukünftigen Selektion des bestimmten Mess- oder Steuerbefehls nochmals auswählen wird.

In einer weiteren bevorzugten Ausgestaltung wird bei der Ermittlung der Voreinstellung der zumindest eine Einstellparameter der Vielzahl von Einstellparametern dem Mess- oder Steuerbefehl in Abhängigkeit der Wahrscheinlichkeitsverteilung zugeordnet.

Mit anderen Worten wird vorzugsweise derjenige Einstellparameter gewählt, der den höchsten Wahrscheinlichkeitswert aufweist oder diejenigen Einstellparameter gewählt, die bspw. einen vorbestimmten Wahrscheinlichkeitswert überschreiten. Somit kann für die Vielzahl von Einstellparametern pro erkanntem, eindeutigen Kontext bzw. Mess- oder Steuerbefehl der wahrscheinlichste Einstellparameter als Voreinstellung ermittelt werden.

Auf diese Weise wird die von dem Benutzer gewählte Vielzahl von Einstellparametern inklusive ihres Bezugs zu einem jeweiligen Mess- oder Steuerbefehl, unter dem sie gewählt wurden, ausgewertet, so dass durch das vorteilhafte Verfahren sozusagen ein Satz an Einstellparameter-Vorschlägen ermittelt wird. Hierdurch kann jeweils zumindest ein Einstellparameter als Voreinstellung zu jedem der Vielzahl an Mess- oder Steuerbefehlen bestimmt werden.

In einer weiteren bevorzugten Ausgestaltung werden die Wahrscheinlichkeitswerte auf Basis eines vorbestimmten Trainingsdatensatzes ermittelt.

Diese Ausgestaltung dient insbesondere der Klarstellung, dass das Auswerten der Vielzahl von Einstellparametern mittels maschinengestützten Lernens, vorzugsweise unter Verwendung einer künstlichen Intelligenz, nicht nur beim laufenden Verfahren, sondern auch mittels eines bereitgestellten Trainingsdatensatzes, sozusagen zur Kalibrierung des Verfahrens, erfolgen kann. Anstelle eines Regelsatzes kann also durch Machine Learning auch ein Modell trainiert werden, das alle beliebigen bzw. möglichen Situationen (z.B. Benutzerinteraktionen) abdeckt.

Der Trainingsdatensatz kann beispielsweise ein gelabelter (durch einen Fachmann vorab ausgewerteter) Datensatz oder ein ungelabelter Datensatz (beispielsweise auf Basis einer Datenhistorie) sein.

In einer weiteren bevorzugten Ausgestaltung werden die Schritte des Empfangens, Auswertens, Ermittelns und Ausgebens kontinuierlich wiederkehrend ausgeführt.

Das heißt mit anderen Worten, dass das Verfahren vorzugsweise auf sich stetig wiederholende Weise durchgeführt wird. Somit kann bei einem (erneuten) Empfangen eines Eingabebefehl, durch den ein Mess- oder Steuerbefehl aus der Vielzahl von Mess- oder Steuerbefehlen durch den Benutzer selektiert wird, der mit diesem empfangene Einstellparameter-Vorschlag und ggf. noch weitere, von dem Benutzer definierte Einstellparameter als Eingangsgröße für den Schritt des (erneuten) Empfangens der Vielzahl von Einstellparametern dienen. Es besteht also eine Rückkopplung vom Schritt des Ausgebens zum Schritt des Empfangens. Die beim Ausgeben erzeugten Daten dienen also als Eingangsdaten für den Schritt des Empfangens, so dass sich die Daten, aus denen die jeweilige Voreinstellung ermittelt wird, kontinuierlich aktualisieren und der auszuwertende Datensatz erweitert wird. Die Aufzeichnung, Analyse und Erweiterung des Regeldatensatzes bzw. die Aktualisierung der Voreinstellungen wird also kontinuierlich fortgeführt. So wird also zur Anwendung des Regeldatensatzes bzw. der Voreinstellungen laufend der Kontext der aktuellen Benutzerinteraktion bestimmt und die hierzu passende Einstellung gewählt.

Vorzugsweise läuft das erfindungsgemäße Verfahren stets im Hintergrund ab und zeichnet dabei sämtliche, von dem Benutzer getätigte Aktionen und/oder Eingaben in Form von Mess- oder Steuerbefehlen sowie dazugehörenden Einstellparametern auf, um diese fortlaufend statistisch und/oder durch maschinengestütztes Lernen auszuwerten.

In einer weiteren bevorzugten Ausgestaltung werden die Schritte des Empfangens, Auswertens, Ermittelns und Ausgebens lediglich ausgeführt, wenn der Benutzer einen vordefinierten Unterstützungsmodus aktiviert.

Diese Ausgestaltung stellt klar, dass das erfindungsgemäße Verfahren nicht notwendigerweise kontinuierlich ausgeführt werden muss, sondern es beispielsweise auch möglich ist, dass der Benutzer einen speziellen Modus aktiviert, in dem das erfindungsgemäße Verfahren ausgeführt wird, oder dass er die Analyse und Erweiterung unabhängig von der Benutzung des eigentlichen Softwarepakets in einer externen Komponente ausführen lassen kann. Die Aufzeichnung, Analyse und Erweiterung des Regeldatensatzes bzw. die Aktualisierung der Voreinstellungen muss also nicht kontinuierlich fortgeführt werden. Die ermittelnden Voreinstellungen für die jeweiligen Mess- oder Steuerbefehle werden in diesem Fall nicht fortlaufend aktualisiert, sondern eine solche Aktualisierung bzw. eine Ermittlung einer (aktuelleren) Voreinstellungen erfolgt lediglich in einem dafür bedingten Modus. Zudem ist klargestellt, dass das erfindungsgemäße Verfahren nicht notwendigerweise eine aktive Eingabe von Mess- oder Steuerbefehlen und Einstellparametern erfordert, sondern das Ermitteln von Voreinstellungen auch auf Grundlage eines externen Datensatzes erfolgen kann.

In einer weiteren bevorzugten Ausgestaltung weist das Verfahren ferner die Schritte auf: Empfangen eines weiteren Eingabebefehls zur Selektion eines bisher unbekannten Mess- oder Steuerbefehls, der erstmals ausgewählt wird; Vergleichen des bisher unbekannten Mess- oder Steuerbefehls mit der Vielzahl von Mess- oder Steuerbefehlen; Ermitteln eines ähnlichen Mess- oder Steuerbefehls aus der Vielzahl von Mess- oder Steuerbefehlen, der dem bisher unbekannten Mess- oder Steuerbefehl ähnlich ist, auf Basis des Vergleichs; und Ausgeben des Einstellparameter-Vorschlags zu dem ähnlichen Mess- oder Steuerbefehl.

In dieser Ausgestaltung wählt der Benutzer beispielsweise einen bisher unbekannten bzw. noch nicht ausgewählten Mess- oder Steuerbefehl zum ersten Mal im Rahmen des erfindungsgemäßen Verfahrens aus und möchte zu diesem beispielsweise eine Vielzahl von Einstellparametern definieren, zu denen verfahrensseitig noch keine Voreinstellung bzw. kein Einstellparameter-Vorschlag verfügbar ist.

In diesem Fall wird vorzugsweise der erstmals ausgewählte Mess- oder Steuerbefehl mit der bereits ausgewählten Vielzahl von Mess- oder Steuerbefehlen verglichen. Auf Grundlage dieses Vergleichs kann dann, ggf. und falls vorhanden, ein zu dem bisher unbekannten Mess- oder Steuerbefehl ähnlicher Mess- oder Steuerbefehl aus der Vielzahl von Mess- oder Steuerbefehlen ermittelt werden, zu welchem bereits eine Voreinstellung ermittelt wurde. Somit ist es möglich, dem Benutzer auch für einen bisher unbekannten Mess- oder Steuerbefehl ein Einstellparameter-Vorschlag bereitzustellen.

Gemäß einer weiteren bevorzugten Ausgestaltung weist das Verfahren ferner die Schritte auf: Empfangen eines weiteren Eingabebefehls zur Selektion eines bisher unbekannten Mess- oder Steuerbefehls, der erstmals ausgewählt wird; Vergleichen des bisher unbekannten Mess- oder Steuerbefehls mit der Vielzahl von Mess- oder Steuerbefehlen; Ermitteln von zumindest zwei ähnlichen Mess- oder Steuerbefehlen aus der Vielzahl von Mess- oder Steuerbefehlen, die dem bisher unbekannten Mess- oder Steuerbefehl ähnlich sind, auf Basis des Vergleichs; Interpolieren zwischen den den zumindest zwei ähnlichen Mess- oder Steuerbefehlen zugeordneten Voreinstellungen; und Ausgeben eines interpolierten Einstellparameter-Vorschlags.

In dieser Ausgestaltung ist es möglich, zu einem bisher unbekannten Mess- oder Steuerbefehl zumindest zwei Mess- oder Steuerbefehle, die den bisher unbekannten Mess- oder Steuerbefehl ähnlich sind, zu ermitteln. Zu den zwei ähnlichen Mess- oder Steuerbefehlen wurde mittels des erfindungsgemäßen Verfahrens bereits jeweils eine Voreinstellung ermittelt, durch die zumindest ein Einstellparameter der Vielzahl von Einstellparametern dem jeweiligen Mess- oder Steuerbefehl zugeordnet wurde. Zwischen diesen bereits bekannten Voreinstellungen kann dann interpoliert werden, um somit einen interpolierten Einstellparameter-Vorschlag für den bisher unbekannten Mess- oder Steuerbefehl auszugeben, so dass der Benutzer auch für diesen bisher unbekannte Mess- oder Steuerbefehl eine Voreinstellung erhält. Wenn also keine der Regeln, die bisher als Voreinstellungen ermittelt wurden, auf den aktuellen Kontext bzw. Mess- oder Steuerbefehl exakt zutrifft, kann auch zwischen den nächstgelegenen Regeln interpoliert werden.

Durch die Interpolation zwischen bereits bekannten Voreinstellungen kann somit auch für Situationen, für die keine explizite Voreinstellung definiert wurde, eine sinnvolle Voreinstellung bestimmt werden.

In einer weiteren Ausgestaltung ist die Vorrichtung zusammen mit weiteren Hardware- und/oder Softwarekomponenten in einem Messgerät bzw. Gesamtsystem umfasst, an diesem angeordnet oder in diesem integriert.

In dieser Ausgestaltung können auch Interaktionen des Benutzers mit einer dieser Komponenten in Form von Mess- oder Steuerbefehlen erfasst werden, so dass auch für diese weiteren Hardware- und/oder Softwarekomponenten entweder komponentenspezifische Voreinstellungen und/oder komponentenübergreifende Voreinstellungen, beispielsweise für das Gesamtsystem, bestimmt werden können.

In einer weiteren Ausgestaltung ist es zudem vorteilhaft, dass die durch das erfindungsgemäße Verfahren bzw. die erfindungsgemäße Vorrichtung ermittelten Voreinstellungen durch den Benutzer editiert, korrigiert und/oder gelöscht werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zudem versteht es sich, dass sich die vorstehend genannten und die nachstehend noch zu erläuternden Merkmale nicht nur auf das erfindungsgemäße Verfahren, sondern in äquivalenter Weise auch auf die erfindungsgemäße Vorrichtung sowie auf das erfindungsgemäße Computerprogrammprodukt beziehen.

Ausführungsbeispiele der Erfindung sind in den Zeichnungen dargestellt und werden in der nachfolgenden Beschreibung näher erläutert. Es zeigen:
- Fig. 1: ein Messgerät mit einem Ausführungsbeispiel der erfindungsgemäßen Vorrichtung;
- Fig. 2: ein Ablaufdiagramm eines Ausführungsbeispiels des erfindungsgemäßen Verfahrens;
- Fig. 3: eine erste schematische Darstellung zur Erläuterung von Prinzipien des erfindungsgemäßen Verfahrens;
- Fig. 4: eine zweite schematische Darstellung zur Erläuterung von Prinzipien des erfindungsgemäßen Verfahrens;
- Fig. 5: eine dritte schematische Darstellung zur Erläuterung von Prinzipien des erfindungsgemäßen Verfahrens;
- Fig. 6: eine vierte schematische Darstellung zur Erläuterung von Prinzipien des erfindungsgemäßen Verfahrens; und
- Fig. 7: eine fünfte schematische Darstellung zur Erläuterung von Prinzipien des erfindungsgemäßen Verfahrens.

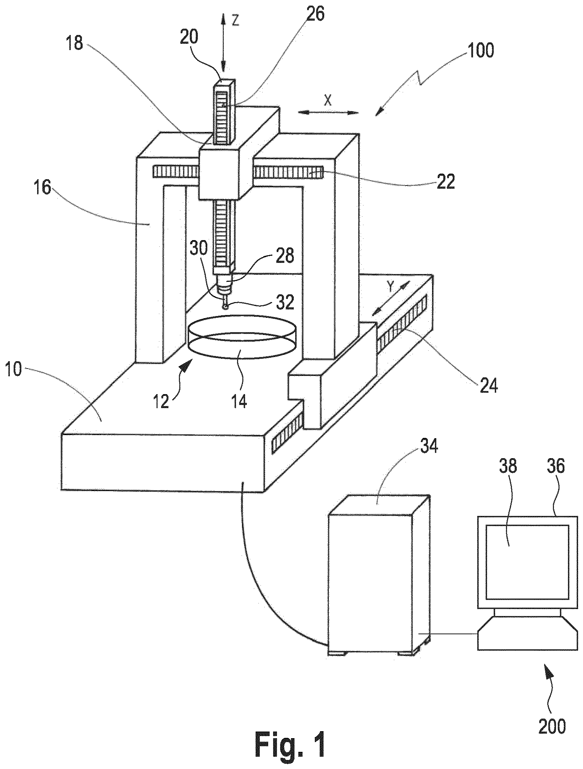

Fig. 1 zeigt ein beispielhaftes Messgerät mit einem Ausführungsbeispiel einer erfindungsgemäßen Vorrichtung, auf der das erfindungsgemäße Verfahren ausführbar ist. Das Messgerät ist in seiner Gesamtheit mit der Bezugsziffer 100 bezeichnet. Die Vorrichtung ist in ihrer Gesamtheit mit der Bezugsziffer 200 gekennzeichnet.

Bei dem Messgerät 100 handelt es sich im vorliegenden Beispiel um ein Koordinatenmessgerät in sogenannter Portalbauweise. In anderen Ausführungsbeispielen kann es sich bei dem Messgerät 100 auch um ein Mikroskop, beispielsweise um ein Rasterelektronenmikroskop oder ein Rasterkraftmikroskop handeln. Ebenso kann es sich bei dem Messgerät 100 um andere Arten von Koordinatenmessgeräten oder um grundsätzlich andere Arten von Messgeräten zur dimensionellen Messung handeln.

Das in Fig. 1 gezeigte Koordinatenmessgerät 100 weist eine Basis 10 auf. Bei der Basis 10 handelt es sich vorzugsweise um eine stabile Platte, welche beispielsweise aus Granit gefertigt ist. Auf der Basis 10 ist eine Werkstückaufnahme 12 angeordnet, die dazu ausgebildet ist, ein Messobjekt 14 zu halten.

Auf der Basis 10 ist ein Portal 16 in Längsrichtung verschiebbar angeordnet. Das Portal 16 dient als bewegliche Trägerstruktur. Das Portal 16 weist zwei von der Basis 10 nach oben abragende Säulen auf, die durch einen Querträger miteinander verbunden sind und gesamthaft eine umgekehrte U-Form aufweisen.

Die Bewegungsrichtung des Portals 16 relativ zu der Basis 10 wird üblicherweise als Y-Richtung bezeichnet. An dem oberen Querträger des Portals 16 ist ein Schlitten 18 angeordnet, der in Querrichtung verfahrbar ist. Diese Querrichtung wird üblicherweise als X-Richtung bezeichnet. Der Schlitten 18 trägt eine Pinole 20, die in Z-Richtung, also senkrecht zu der Basis 10, verfahrbar ist.

Die Bezugsziffern 22, 24, 26 bezeichnen Messeinrichtungen, anhand derer die X-, Y- und Z-Positionen des Portals 16, des Schlittens 18 und der Pinole 20 bestimmt werden können. Typischerweise handelt es sich bei den Messeinrichtungen 22, 24, 26 um Glasmaßstäbe, welche als Messskalen dienen. Diese Messskalen sind in Verbindung mit entsprechenden Leseköpfen (hier nicht dargestellt) dazu ausgebildet, die jeweils aktuelle Position des Portals 16 relativ zu der Basis 10, die Position des Schlittens 18 relativ zu dem oberen Querbalken des Portals 16 und die Position der Pinole 20 relativ zu dem Schlitten 18 zu bestimmen.

An einem unteren, freien Ende der Pinole 20 ist ein Messkopf 28 angeordnet. Der Messkopf 28 ist dazu eingerichtet, Messpunkte an dem Messobjekt 14 zu erfassen. Der Messkopf 28 ist Teil eines Messsensors, dessen Messsensorik von dem Messkopf 28 separat angeordnet oder in diesen integriert und über ein oder mehrere Kabel oder kabellos mit diesen verbunden sein kann. Der Messkopf 28 weist einen in Z-Richtung in Richtung der Basis abragenden, taktilen Taststift 30 auf. Der Taststift 30 ist dazu eingerichtet, mittels eines Tastkopfes 32 eine Oberfläche des Messobjektes 14 abzutasten. Der Tastkopf 32 ist beispielsweise eine Rubinkugel.

Bei der Abtastung der Oberfläche des Messobjektes 14 erzeugt der Tastkopf 32 in dem Messkopf 28 ein elektrisches Messsignal, auf Basis dessen die dimensionellen Eigenschaften des zu vermessenden Messobjektes 14 ermittelt werden können. Zum Anfahren der Messpunkte an dem Messobjekt 14 wird der Messkopf 28 relativ zu der Werkstückaufnahme 12 bzw. zu dem Messobjekt 14 verfahren. Hierzu werden die Bewegungen des Portals 16 relativ zu der Basis 10, des Schlittens 18 relativ zu dem Portal 16 und der Pinole 20 relativ zu dem Schlitten 18 von einer Auswerte- und Steuereinheit 34 durch eine Vielzahl von vordefinierten Steuerbefehlen beispielsweise über eine CNC-Ansteuerung gesteuert.

Die Auswerte- und Steuereinheit 34 ist in Fig. 1 beabstandet von dem Koordinatenmessgerät 100 als separate Einheit angeordnet und mit der Basis 10 des Koordinatenmessgerätes über mehrere Kabel verbunden. Die Auswerte- und Steuereinheit 34 ist ferner auch als Teil der Vorrichtung 200 anzusehen. Die Vorrichtung 200 dient nicht nur der Steuerung des Koordinatenmessgeräts 100, sondern im Vorfeld der Messung auch der Unterstützung eines Benutzers bei einer Erstellung eines Messplans für eine mit dem Koordinatenmessgerät 100 durchzuführende Messung und/oder während der Messung bei einer Steuerung der mit dem Koordinatenmessgerät 100 durchzuführenden Messung.

Bevor eine solche Messung beginnt, wird der Messablauf typischerweise in einem Messplan festgelegt. Hierbei wird insbesondere festgelegt, welche geometrischen Elemente (Messelemente) des Messobjektes 14 gemessen werden sollen und welche dimensionelle Messgrößen (Prüfmerkmale) dieser Messelemente durch das Koordinatenmessgerät 100 quantitativ erfasst werden sollen. Ferner werden in dem Messplan diverse Parameter zur Messstrategie, Messgeschwindigkeit sowie zur Steuerung des Koordinatenmessgerätes 100 und insbesondere des Messkopfes 28 festgelegt.

Die Vorrichtung 200 ist vorliegend als ein Computer 36 ausgestaltet. Dieser Computer 36 weist neben der Auswerte- und Steuereinheit 34, die typischerweise als Recheneinheit des Computers ausgestaltet ist, ein Display 38 auf. Die Auswerte- und Steuereinheit 34 weist vorzugsweise einen Prozessor und eine Speichereinrichtung (z.B. eine Festplatte) auf. In dieser Speichereinrichtung ist ein Programmcode einer Software-applikation gespeichert, die mithilfe des Prozessors der Auswerte- und Steuereinheit 34 ausführbar ist. Vorliegend ist die Auswerte- und Steuereinheit 34 außerhalb des Computers 36 angeordnet, kann jedoch auch in diesem integriert sein.

Eine beispielhafte Softwareapplikation ist die von der Anmelderin vertriebene Software CALYPSO. CALYPSO ist eine Software zur Planung von Messpfaden und zur Auswertung von Messpunkten, die bevorzugt dazu ausgebildet ist, das erfindungsgemäße Verfahren auszuführen.

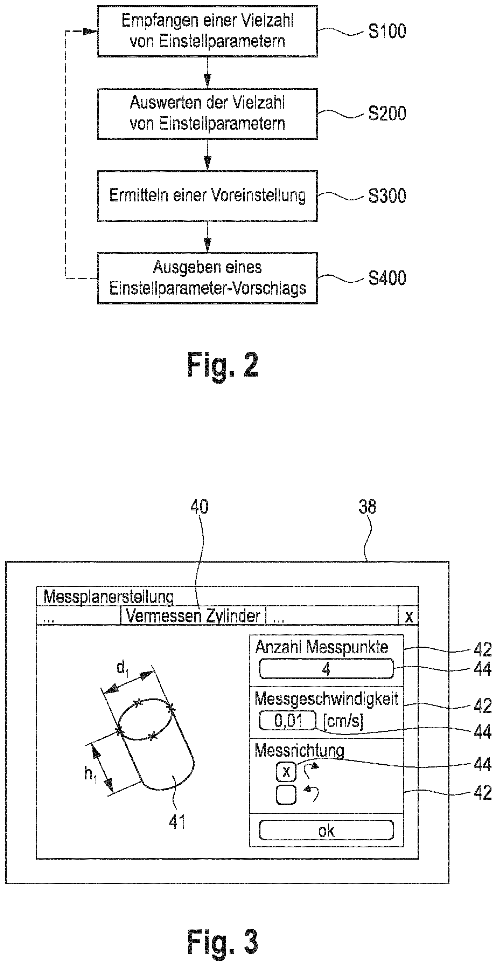

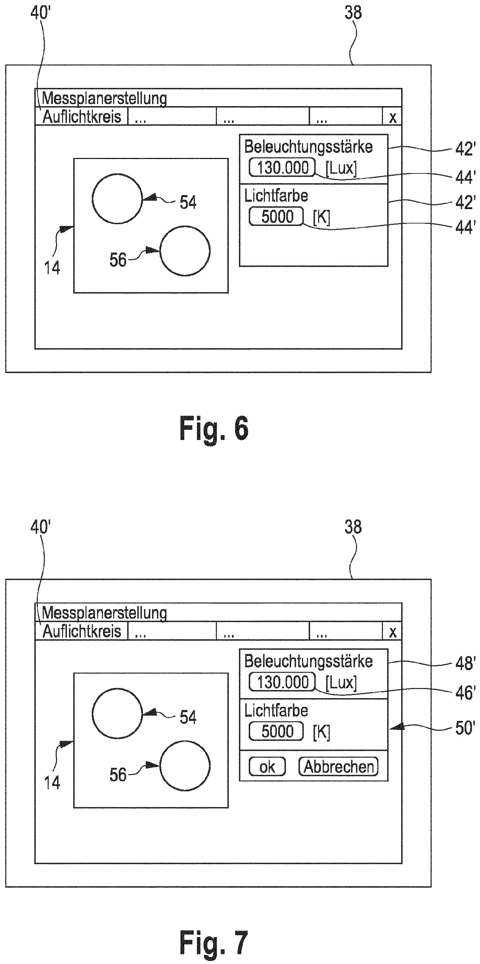

In Fig. 2 ist das erfindungsgemäße Verfahren als Ablaufdiagramm gezeigt. Zum besseren Verständnis ist das erfindungsgemäße Verfahren in den Figuren 3 bis 5 anhand eines beispielhaften, durch einen Nutzer ausgewählten Messbefehls verdeutlicht. In den Figuren 6 und 7 ist zur weiteren Verdeutlichen das erfindungsgemäße Verfahren anhand eines beispielhaften, durch einen Nutzer ausgewählten Steuerbefehls verdeutlicht. Die bezüglich Fig. 2 eingeführten Bezugszeichen sind jeweils den Figuren 3 bis 7 zu entnehmen.

In einem Schritt S100 wird eine Vielzahl von Einstellparametern 42 empfangen, die von einem Benutzer bezüglich eines Mess- oder Steuerbefehls 40 aus einer Vielzahl von Mess- oder Steuerbefehlen für die mit dem Koordinatenmessgerät 100 durchzuführende Messung ausgewählt werden.

In Schritt S200 erfolgt ein Auswerten der Vielzahl von Einstellparameter 42 auf Basis einer statistischen Auswertung und/oder einer Auswertung mittels maschinengestützten Lernens.

Vorzugsweise ist bspw. die Auswerte- und Steuereinheit 34 dazu eingerichtet, die Vielzahl von Einstellparametern 42 auf statistische Art und Weise auszuwerten und/oder verfügt über eine künstliche Intelligenz, beispielsweise in Form eines neuronalen Netzwerkes, durch die eine Auswertung auf Basis maschinengestützten Lernens ermöglicht ist. Die einzelnen Rechenvorgänge bei der Auswertung der Vielzahl von Einstellparametern 42 werden vorzugsweise mittels eines leistungsstarken Prozessors, der in der Auswerte- und Steuereinheit 34 verbaut ist, ausgeführt.

In einem Schritt S300 wird eine Voreinstellung 46 ermittelt, durch die zumindest ein Einstellparameter 48 der ausgewerteten Vielzahl von Einstellparametern 42 dem Mess- oder Steuerbefehl 40 zugeordnet wird.

In einem Schritt S400 wird einem Benutzer ein Einstellparameter-Vorschlag 50 basierend auf der ermittelten Voreinstellung 46 ausgegeben, wenn ein Eingabebefehl zur Selektion des Mess- oder Steuerbefehls 40 (erneut) empfangen, d.h. bspw. durch eine Benutzereingabe in die CALYPSO-Software, eingegeben wird.

Im vorliegenden Fall dient der ermittelte Einstellparameter-Vorschlag 50 und ggf. auch noch weitere Einstellparameter, die von dem Benutzer bezüglich des Mess- oder Steuerbefehls 40 ausgewählt werden, wieder als Eingabe für den Schritt S100, da das Verfahren gemäß dem Ausführungsbeispiel in Fig. 2 fortlaufend (in Form einer Dauerschleife) ausgeführt wird.

In den Figuren 3 bis 5 sind drei voneinander verschiedene, schematische Displayansichten dargestellt, wie sie ein Benutzer der CALYPSO-Software beispielhaft auf dem Display 38 beim Erstellen eines Messplans sieht. Zum besseren Verständnis wird in Fig. 3 zunächst die Selektion des Messbefehls 40 aus einer Vielzahl von Messbefehlen und die Auswahl der zugehörigen Vielzahl von Einstellparametern erklärt, die bspw. als Eingangsgröße für den Schritt S100 dienen.

Durch Navigation mittels Maus und/oder Tastatur gelangt der Benutzer beispielsweise zuerst in das Menü "Messplanerstellung" und anschließend in das Untermenü "Vermessen Zylinder", das dem Benutzer in dem Menü "Messplanerstellung" als eines von mehreren Untermenüs zur Auswahl steht. Grundsätzlich können diese Interaktion des Benutzers bereits als Messbefehle im erfindungsgemäßen Sinne verstanden werden.

Vorliegend erzeugt der Benutzer einen Eingabebefehl zu Selektion des Messbefehls 40, bspw. durch Klicken oder Doppelklicken per Maus auf das Feld "Vermessen Zylinder". Hierdurch öffnet sich eine Eingabemaske (siehe Fig. 3, rechts), die den Benutzer dabei unterstützt, Einstellungen vorzunehmen, um einen Zylinder 41 zu vermessen. Der Zylinder 41 stellt somit das zu vermessende Messelement dar. Der Messbefehl 40 "Vermessen Zylinder" ist nur einer aus einer Vielzahl von verfügbaren Messbefehlen, die seitens des Benutzers selektierbar sind.

Zu dem selektierten Messbefehl 40 legt der Benutzer nun eine Vielzahl von Einstellparametern 42, vorliegend eine Anzahl von Messpunkten, eine Messgeschwindigkeit und eine Messrichtung, an. Die durch den Benutzer ausgewählte Vielzahl von Einstellparametern 42 bezieht sich in Fig. 3 direkt auf den Zylinder 41 bzw. auf dessen konkrete Dimensionierung (d1 und h1). Für jeden der Vielzahl von Einstellparametern 42 gibt der Benutzer einen konkreten Parameterwert 44 (im Falle der Anzahl von Messpunkten den Zahlenwert "4") über eine Eingabemaske ein und bestätigt diese Eingabe(n) vorzugsweise über einen OK-Button.

Die durch den Benutzer getätigten Eingaben in Form der Vielzahl von Einstellparametern 42 bezüglich des selektierten Messbefehls 40 werden erfindungsgemäß (in Schritt S100) von der Auswerte- und Steuereinheit 34 empfangen und vorzugsweise abgespeichert.

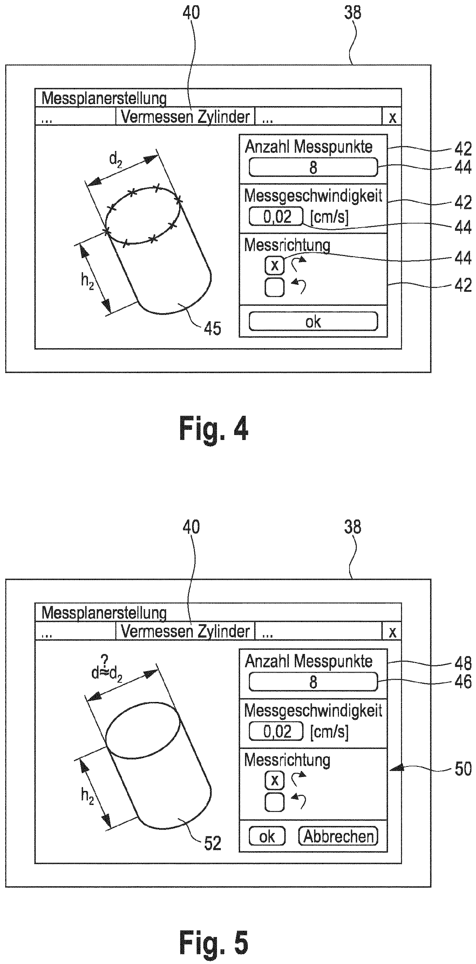

In Fig. 4 ist eine zweite schematische Darstellung einer Displayansicht dargestellt, in der der Benutzer zu einem zweiten Zylinder 45, der sich von dem Zylinder 41 unterscheidet, die Vielzahl von Einstellparametern 42 auswählt und dabei für jeden ausgewählten Einstellparameter andere Parameterwerte 44 definiert, da der zweite Zylinder 45 im Vergleich zu den Zylinder 41 eine größere Dimension (d2, h2) aufweist. Auch in Fig. 4 dient bspw. ein Klicken oder Doppel-Klicken auf den zweiten Zylinder 45 als Eingabebefehl bezüglich des Messbefehls 40. Die zu dem Messbefehl 40 ausgewählte Vielzahl von Einstellparametern 42 wird wiederum von der Auswerte- und Steuereinheit 34 empfangen und vorzugsweise abgespeichert.

Gemäß den Fig. 3 und 4 wurde somit zu demselben Messbefehl 40 "Vermessen Zylinder" eine Vielzahl an Einstellparametern, vorliegend sich zumindest teilweise unterscheidend durch ihre Parameterwerte, bezüglich der Zylinder 41, 45 empfangen (Schritt S100), die für die Schritte S200 (Auswerten) und S300 (Ermitteln) verfahrensseitig verwendet werden.

Die Vielzahl von Einstellparametern 42 wird nun statistisch und/oder durch maschinengestütztes Lernen ausgewertet, um aus der ausgewerteten Vielzahl von Einstellparametern 42 zumindest einen Einstellparameter 48 als Voreinstellung 46 zu ermitteln und dem Benutzer beim erneuten Selektieren desselben Messbefehls 40 als Einstellparameter-Vorschlag 50 auszugeben (Schritt S400).

Vorliegend führt die erfindungsgemäße Auswertung bspw. dazu, dass bspw. auch Metadaten zu den einzelnen Einstellparametern 42 (z.B. zu welcher Messobjektdimension d1, h1, d2, h2 welche Einstellparameterwerte durch den Benutzer ausgewählt wurden) mit einbezogen werden.

In Fig. 5 ist das Ausgeben eines Einstellparameter-Vorschlags 50 basierend auf der aus der Vielzahl von Einstellparametern 42 (bspw. aus Figuren 3 und 4) ermittelten Voreinstellung gezeigt.

Wenn der Benutzer bspw. einen dritten Zylinder 52 im Messplan auswählt, d.h. erneut einen Eingabebefehl zur Selektion des Messbefehls 40 "Vermessen Zylinder" erzeugt, wird durch das erfindungsgemäße Verfahren der Einstellparameter-Vorschlag 50 (bspw. akustisch, visuell und/oder taktil) ausgegeben. Dabei erkennt das Verfahren bspw. auf Basis der in die Auswertung einbezogenen Metadaten, dass der dritte Zylinder 52 einen ähnlichen oder identischen Durchmesser wie der zweite Zylinder 45 (Abfrage d=d2 ?) hat, und gibt dem Benutzer den Einstellparameter-Vorschlag 50 aus, in dem ihm die Einstellparameter(werte) des zweiten Zylinders 45 auch für den dritten Zylinder 52 vorgeschlagen werden. Der Benutzer kann diesen Vorschlag bspw. durch Drücken eines OK-Buttons annehmen oder durch Drücken eines Abbrechen-Buttons ablehnen.

In den Fig. 6 und 7 sind zwei beispielhafte Displayansichten dargestellt, die der Benutzer bspw. bei der Eingabe von Steuerbefehlen vorfindet.

Im Falle von Fig. 6 misst der Benutzer bspw. in einem Untermenü "Auflichtkreis" mehrfach einen Auflichtkreis 54 an dem Messobjekt 14. Ein Auflichtkreis entspricht dabei einem Messelement-Kreis, der auf dem Messobjekt 14 und mit einer sog. Auflichtbeleuchtung (oder auch Hellfeld-Beleuchtung, engl. Bright-Field) gemessen wird, wobei durch die Auflichtbeleuchtung die Erfassbarkeit des Messobjekts 14 insbesondere für optische Messgeräte 100 verbessert wird. Zu jedem gemessenen Auflichtkreis definiert der Benutzer vorzugsweise bestimmte Kantenfindungsparameter.

Der Benutzer kann bspw. neben Lichtstärke, Helligkeit, Lichtfarbe und Intensität auch weitere Kantenfindungsparameter, wie den Lichtfokus, bspw. durch softwareseitiges Öffnen oder Schließen einer Blende, ein, was softwareseitige durch die Definition der Auflichtkreise 54 an dem Messobjekt 14 erfolgt.

Das Messen eines solchen Auflichtkreises 54 wird als Steuerbefehl 40' im erfindungsgemäßen Sinne verstanden werden. Zu dem Auflichtkreis 54 kann der Benutzer eine Vielzahl von Einstellparametern 42' (bspw. Beleuchtungsstärke, Lichtfarbe, etc.) auswählen und diesen bestimmte Parameterwerte 44' zuordnen. Diese Einstellparameter 42' werden für jeden gemessenen Auflichkreis 54 empfangen und ausgewertet, um aus den ausgewerteten Einstellparametern 42' eine bevorzugte Voreinstellung 46' bezüglich eines bestimmten Steuerbefehls zu ermitteln.

Misst der Benutzer nun einen weiteren Auflichtkreis 56, wie dies in Fig. 7 erkennbar ist, ist es durch das erfindungsgemäße Verfahren möglich, dass bspw. erkannt wird, dass der Benutzer wahrscheinlich zu dem gemessenen Auflichtkreis 54 weitere Kantenfindungsparameter definieren möchte, wobei all diese Einstellparameter erfindungsgemäß als Einstellparameter-Vorschlag 50' dem Benutzer bereitgestellt werden können.

Bei dem in den Fig. 6 und 7 erläuterten Beispiel wurde das erfindungsgemäße Verfahren zur besseren Verständlichkeit und Darstellbarkeit stark vereinfacht dargestellt. In anderen, vorteilhaften Anwendungsbeispielen des erfindungsgemäßen Verfahrens bzw. der Vorrichtung 200 kann bspw. nicht durch das (aktive) Auswählen der Schaltfläche "Auflichtkreis" der Eingabe- bzw. Steuerbefehl sein. Ebenfalls ist es möglich, dass durch das Verfahren und die Vorrichtung bereits das Vermessen eines (beliebigen) Kreises durch den Benutzer als Steuerbefehl erkannt wird. Das System, insbesondere durch das maschinengestützte Lernen, erkennt dann bspw. anhand des Kontextes, dass der Benutzer einen "Auflichtkreis" messen möchte und stellt automatisch die zuvor von dem Benutzer eingestellten Kantenfindungsparameter für "Auflichtkreis" ein, die dem Benutzer als der Einstellparameter-Vorschlag 50' angezeigt werden. Durch das erfindungsgemäße Verfahren ist es also möglich, dass anhand des Kontextes bereits darauf geschlossen wird, was der Benutzer im nächsten Schritt zumindest mit einer gewissen Wahrscheinlichkeit vorhaben könnte, um dem Benutzer einen hierzu passenden Einstellparameter-Vorschlag auszugeben.

Zuvor Genanntes gilt auch bezüglich des in den Fig. 3 bis 6 gezeigten Ausführungsbeispiels in analoger Art und Weise, so dass nicht nur das Auswählen der Schaltfläche "Vermessen Zylinder" als Messbefehl erkannt werden kann, sondern bspw. auch bereits das Anlegen eines Zylinders in einer anderen Anwendungsumgebung als Messbefehl fungiert, durch den das System erkennt, dass der Benutzer wahrscheinlich den Zylinder als Messelement anlegen möchte und ihm deshalb für den nächsten Schritt bereits den Einstellparameter-Vorschlag 50 ausgibt, in dem zumindest einer der zylinderbezogenen Einstellparameter voreingestellt ist.

Ebenfalls kann das System bzw. das Verfahren auch bereits auf Basis dessen, dass der Benutzer ein bestimmtes User-Interface (bspw. Fenster und/oder eine bestimmte Menüleiste) wiederholt schließt bzw. ausblendet, erkennen, dass der Benutzer die Sichtbarkeit des User-Interface nicht benötigt. Als Einstellparameter-Vorschlag kann das System dann ein automatisches Ausblenden des User-Interface ausgeben. Selbiges gilt auch für ein wiederholtes Einblenden eines User-Interface. Allgemein können also sämtliche kontextsensitive Einstellungen bzw. Aktionen, die der Benutzer tätigt, als Mess- oder Steuerbefehle oder als Vielzahl von Einstellparametern erkannt und erfindungsgemäß ausgewertet werden.

Es versteht sich, dass sich die zuvor erwähnten Beispiele auf die Anwendung für beliebige Mess- oder Steuerbefehle und beliebige Einstellparameter übertragen lassen. Ebenso versteht es sich, dass die zuvor erwähnten Beispiele stark vereinfacht wurden. In der Praxis erfolgen die statistische Auswertung und/oder die Auswertung mittels maschinengestützten Lernens nicht nur anhand zweier vorab empfangener und abgespeicherter Eingaben, sondern anhand einer sehr großen Zahl vorab empfangener und abgespeicherter Eingaben. Je mehr solcher Eingaben empfangen und abgespeichert werden, desto validere Ergebnisse liefert die Auswertung und desto besser lassen sich die Voreinstellungen für einen bestimmten Mess- oder Steuerbefehl ermitteln.

## Patentansprüche

1. Verfahren zur Unterstützung eines Benutzers bei einer Erstellung eines Messplans für eine mit einem dimensionellen Messgerät (100) durchzuführende Messung und/oder bei einer Steuerung der mit dem Messgerät (100) durchzuführenden Messung, wobei das Verfahren die folgenden Schritte aufweist:
- Bereitstellen einer Vorrichtung (10) zur Steuerung des dimensionellen Messgerätes und zur Unterstützung eines Benutzers bei einer Erstellung eines Messplans für eine mit dem dimensionellen Messgerät (100) durchzuführende Messung und/oder während der Messung bei der Steuerung der mit dem Messgerät (100) durchzuführenden Messung, wobei die folgenden weiteren Schritten von dieser Vorrichtung auszuführen sind;
- Empfangen (S100) einer Vielzahl von Einstellparametern (42), die von einem Benutzer bezüglich eines Mess- oder Steuerbefehls (40) aus einer Vielzahl von Mess- oder Steuerbefehlen für die mit dem Messgerät (100) durchzuführende Messung ausgewählt werden;
- Auswerten (S200) der Vielzahl von Einstellparametern (42) auf Basis einer statistischen Auswertung und/oder einer Auswertung mittels maschinengestützten Lernens;
- Ermitteln (S300) einer Voreinstellung (46), durch die zumindest ein Einstellparameter (48) der ausgewerteten Vielzahl von Einstellparametern (42) dem Mess- oder Steuerbefehl (40) zugeordnet wird; und
- Ausgeben (S400) eines Einstellparameter-Vorschlags (50) basierend auf der ermittelten Voreinstellung (46), wenn ein Eingabebefehl zur Selektion des Mess- oder Steuerbefehls (40) empfangen wird.

2. Verfahren nach Anspruch 1, wobei die Vielzahl von Einstellparametern (42) jeweils Parameterwerte (44) und/oder Informationen bezüglich des Mess- oder Steuerbefehls (40) aufweist.

3. Verfahren nach Anspruch 1 oder 2, wobei bei der statistischen Auswertung eine Häufigkeitsverteilung ermittelt wird, in der jedem der empfangenen Vielzahl von Einstellparametern (42) ein Häufigkeitswert zugeordnet wird.

4. Verfahren nach Anspruch 3, wobei bei der Ermittlung der Voreinstellung der zumindest eine Einstellparameter (48) der Vielzahl von Einstellparametern (42) dem Mess- oder Steuerbefehl (40) in Abhängigkeit der Häufigkeitsverteilung zugeordnet wird.

5. Verfahren nach einem der Ansprüche 1-4, wobei bei der Auswertung mittels maschinengestützten Lernens eine Wahrscheinlichkeitsverteilung ermittelt wird, in der jedem der empfangenen Vielzahl von Einstellparametern (42) ein Wahrscheinlichkeitswert zugeordnet wird.

6. Verfahren nach Anspruch 5, wobei bei der Ermittlung der Voreinstellung (46) der zumindest eine Einstellparameter (48) der Vielzahl von Einstellparametern (42) dem Mess- oder Steuerbefehl (40) in Abhängigkeit der Wahrscheinlichkeitsverteilung zugeordnet wird.

7. Verfahren nach Anspruch 5 oder 6, wobei die Wahrscheinlichkeitswerte auf Basis eines vorbestimmten Trainingsdatensatzes ermittelt werden.

8. Verfahren nach einem der Ansprüche 1-7, wobei die Schritte des Empfangens, Auswertens, Ermitteins und Ausgebens kontinuierlich, wiederkehrend ausgeführt werden.

9. Verfahren nach einem der Ansprüche 1-7, wobei die Schritte des Empfangens, Auswertens, Ermittelns und Ausgebens lediglich ausgeführt werden, wenn der Benutzer einen vordefinierten Unterstützungsmodus aktiviert.

10. Verfahren nach einem der Ansprüche 1-9, wobei das Verfahren ferner die Schritte aufweist:
- Empfangen eines weiteren Eingabebefehls zur Selektion eines bisher unbekannten Mess- oder Steuerbefehls, der erstmals ausgewählt wird;
- Vergleichen des bisher unbekannten Mess- oder Steuerbefehls mit der Vielzahl von Mess- oder Steuerbefehlen;
- Ermitteln eines ähnlichen Mess- oder Steuerbefehls aus der Vielzahl von Mess- oder Steuerbefehlen, der dem bisher unbekannten Mess- oder Steuerbefehl ähnlich ist, auf Basis des Vergleichs; und
- Ausgeben des Einstellparameter-Vorschlags (50) zu dem ähnlichen Mess- oder Steuerbefehl.

11. Verfahren nach einem der Ansprüche 1-9, wobei das Verfahren ferner die Schritte aufweist:
- Empfangen eines weiteren Eingabebefehls zur Selektion eines bisher unbekannten Mess- oder Steuerbefehls, der erstmals ausgewählt wird;
- Vergleichen des bisher unbekannten Mess- oder Steuerbefehls mit der Vielzahl von Mess- oder Steuerbefehlen;
- Ermitteln von zumindest zwei ähnlichen Mess- oder Steuerbefehlen aus der Vielzahl von Mess- oder Steuerbefehlen, die dem bisher unbekannten Mess- oder Steuerbefehl ähnlich sind, auf Basis des Vergleichs;
- Interpolieren zwischen den den zumindest zwei ähnlichen Mess- oder Steuerbefehlen zugeordneten Voreinstellungen; und
- Ausgeben eines interpolierten Einstellparameter-Vorschlags.

12. Computerprogrammprodukt mit einem Programmcode, der dazu eingerichtet ist, dass die Vorrichtung nach einem der Ansprüche 13 und 14 ein Verfahren nach einem der Ansprüche 1 bis 11 ausführt.

13. Vorrichtung zur Steuerung eines dimensionellen Messgerätes und zur Unterstützung eines Benutzers bei einer Erstellung eines Messplans für eine mit dem dimensionellen Messgerät (100) durchzuführende Messung und/oder zur Unterstützung eines Benutzers während der Messung bei der Steuerung der mit dem dimensionellen Messgerät (100) durchzuführenden Messung, wobei die Vorrichtung (200) ein Display (38) und eine Auswerte- und Steuereinheit (34) aufweist, wobei die Auswerte- und Steuereinheit (34) über eine Datenverbindung mit dem Display (38) verbunden ist und dazu eingerichtet ist:
- eine Vielzahl von Einstellparametern (42), die von einem Benutzer bezüglich eines Mess- oder Steuerbefehls (40) aus einer Vielzahl von Mess- oder Steuerbefehlen für die mit dem Messgerät (100) durchzuführende Messung ausgewählt werden, zu empfangen;
- die Vielzahl von Einstellparametern (42) auf Basis einer statistischen Auswertung und/oder einer Auswertung mittels maschinengestützten Lernens auszuwerten;
- eine Voreinstellung (46), durch die zumindest ein Einstellparameter (48) der ausgewerteten Vielzahl von Einstellparametern (42) dem Mess- oder Steuerbefehl (40) zuordnet wird, zu ermitteln; und
- einen Einstellparameter-Vorschlag (50) basierend auf der ermittelten Voreinstellung (46) auszugeben, wenn ein Eingabebefehl zur Selektion des Mess- oder Steuerbefehls (40) empfangen wird.

14. Vorrichtung nach Anspruch 13, wobei die Vorrichtung (200) zusammen mit weiteren Hardware- und/oder Softwarekomponenten in einem Messgerät (100) umfasst, an diesem angeordnet oder in diesem integriert ist.

## Claims

1. Method for assisting a user in creating a measurement plan for a measurement to be carried out with a dimensional measuring apparatus (100) and/or in controlling the measurement to be carried out with the measuring apparatus (100), wherein the method comprises the following steps:
- providing a device (10) for controlling the dimensional measuring apparatus and for assisting a user in creating a measurement plan for a measurement to be carried out with the dimensional measuring apparatus (100) and/or during the measurement in the course of control of the measurement to be carried out with the measuring apparatus (100), wherein the following further steps are to be carried out by this device:
- receiving (S100) a plurality of setting parameters (42) which are selected by a user with regard to one measurement or control command (40) from a plurality of measurement or control commands for the measurement to be carried out with the measuring apparatus (100);
- evaluating (S200) the plurality of setting parameters (42) on the basis of a statistical evaluation and/or an evaluation by means of machine-assisted learning;
- determining (S300) a presetting (46) which assigns at least one setting parameter (48) of the evaluated plurality of setting parameters (42) to the measurement or control command (40); and
- outputting (S400) a setting parameter proposal (50) on the basis of the determined presetting (46) if an input command for selecting the measurement or control command (40) is received.

2. Method according to Claim 1, wherein the plurality of setting parameters (42) comprise in each case parameter values (44) and/or information with regard to the measurement or control command (40).

3. Method according to Claim 1 or 2, wherein the statistical evaluation involves determining a frequency distribution in which a frequency value is assigned to each of the received plurality of setting parameters (42) .

4. Method according to Claim 3, wherein determining the presetting involves assigning the at least one setting parameter (48) of the plurality of setting parameters (42) to the measurement or control command (40) depending on the frequency distribution.

5. Method according to any one of Claims 1-4, wherein the evaluation by means of machine-assisted learning involves determining a probability distribution in which a probability value is assigned to each of the received plurality of setting parameters (42).

6. Method according to Claim 5, wherein determining the presetting (46) involves assigning the at least one setting parameter (48) of the plurality of setting parameters (42) to the measurement or control command (40) depending on the probability distribution.

7. Method according to Claim 5 or 6, wherein the probability values are determined on the basis of a predetermined training data set.

8. Method according to any one of Claims 1-7, wherein the steps of receiving, evaluating, determining and outputting are carried out continuously, recurrently.

9. Method according to any one of Claims 1-7, wherein the steps of receiving, evaluating, determining and outputting are carried out only if the user activates a predefined assistance mode.

10. Method according to any one of Claims 1-9, wherein the method furthermore comprises the following steps:
- receiving a further input command for selecting a hitherto unknown measurement or control command which is selected for the first time;
- comparing the hitherto unknown measurement or control command with the plurality of measurement or control commands;
- determining a similar measurement or control command from the plurality of measurement or control commands, which is similar to the hitherto unknown measurement or control command, on the basis of the comparison; and
- outputting the setting parameter proposal (50) with respect to the similar measurement or control command.

11. Method according to any one of Claims 1-9, wherein the method furthermore comprises the following steps:
- receiving a further input command for selecting a hitherto unknown measurement or control command which is selected for the first time;
- comparing the hitherto unknown measurement or control command with the plurality of measurement or control commands;
- determining at least two similar measurement or control commands from the plurality of measurement or control commands, which are similar to the hitherto unknown measurement or control command, on the basis of the comparison;
- interpolating between the presettings assigned to the at least two similar measurement or control commands; and
- outputting an interpolated setting parameter proposal.

12. Computer program product comprising program code configured so that the device according to either of Claims 13 and 14 carries out a method according to any one of Claims 1 to 11.

13. Device for controlling a dimensional measuring apparatus and for assisting a user in creating a measurement plan for a measurement to be carried out with the dimensional measuring apparatus (100) and/or for assisting a user during the measurement in the course of control of the measurement to be carried out with the dimensional measuring apparatus (100), wherein the device (200) comprises a display (38) and an evaluation and control unit (34), wherein the evaluation and control unit (34) is connected to the display (38) via a data connection and is configured:
- to receive a plurality of setting parameters (42) which are selected by a user with regard to one measurement or control command (40) from a plurality of measurement or control commands for the measurement to be carried out with the measuring apparatus (100);
- to evaluate the plurality of setting parameters (42) on the basis of a statistical evaluation and/or an evaluation by means of machine-assisted learning;
- to determine a presetting (46) which assigns at least one setting parameter (48) of the evaluated plurality of setting parameters (42) to the measurement or control command (40); and
- to output a setting parameter proposal (50) on the basis of the determined presetting (46) if an input command for selecting the measurement or control command (40) is received.

14. Device according to Claim 13, wherein the device (200) together with further hardware and/or software components is comprised in a measuring apparatus (100), is arranged thereat or is integrated therein.

## Revendications

1. Procédé d'assistance d'un utilisateur lors de la création d'un plan de mesure pour une mesure à réaliser avec un appareil de mesure (100) dimensionnel et/ou lors de la commande de la mesure à réaliser avec l'appareil de mesure (100), le procédé comprenant les étapes suivantes :
- fourniture d'un dispositif (10) destiné à commander l'appareil de mesure dimensionnel et à assister un utilisateur lors de la création d'un plan de mesure pour une mesure à réaliser avec l'appareil de mesure (100) dimensionnel et/ou pendant la mesure lors de la commande de la mesure à réaliser avec l'appareil de mesure (100), les étapes supplémentaires suivantes étant à exécuter par ce dispositif :
- réception (S100) d'une pluralité de paramètres de réglage (42), qui sont sélectionnés par un utilisateur concernant une instruction de mesure ou de commande (40) parmi une pluralité d'instructions de mesure ou de commande pour la mesure à réaliser avec l'appareil de mesure (100) ;
- interprétation (S200) de la pluralité de paramètres de réglage (42) sur la base d'une interprétation statistique et/ou d'une interprétation au moyen d'un apprentissage automatique ;
- détermination (S300) d'un préréglage (46), par lequel au moins un paramètre de réglage (48) de la pluralité sélectionnée de paramètres de réglage (42) est affecté à l'instruction de mesure ou de commande (40) ; et
- délivrance en sortie (S400) d'une proposition de paramètre de réglage (50) en se basant sur le préréglage (46) déterminé lorsqu'une instruction de saisie destinée à la sélection de l'instruction de mesure ou de commande (40) est reçue.

2. Procédé selon la revendication 1, la pluralité de paramètres de réglage (42) comprenant respectivement des valeurs de paramètre (44) et/ou des informations concernant l'instruction de mesure ou de commande (40).

3. Procédé selon la revendication 1 ou 2, une distribution de fréquence étant déterminée lors de l'interprétation statistique, dans laquelle une valeur de fréquence est attribuée à chacun de la pluralité reçue de paramètres de réglage (42).

4. Procédé selon la revendication 3, l'au moins un paramètre de réglage (48) de la pluralité de paramètres de réglage (42) étant, lors de la détermination du préréglage, affecté à l'instruction de mesure ou de commande (40) en fonction de la distribution de fréquence.

5. Procédé selon l'une des revendications 1 à 4, une distribution de probabilité étant déterminée lors de l'interprétation au moyen de l'apprentissage automatique, dans laquelle une valeur de probabilité est attribuée à chacun de la pluralité reçue de paramètres de réglage (42) .

6. Procédé selon la revendication 5, l'au moins un paramètre de réglage (48) de la pluralité de paramètres de réglage (42) étant, lors de la détermination du préréglage (46), affecté à l'instruction de mesure ou de commande (40) en fonction de la distribution de probabilité.

7. Procédé selon la revendication 5 ou 6, les valeurs de probabilité étant déterminées sur la base d'un jeu de données d'entraînement prédéterminé.

8. Procédé selon l'une des revendications 1 à 7, les étapes de réception, d'interprétation, de détermination et de délivrance en sortie étant exécutées continuellement de manière répétitive.

9. Procédé selon l'une des revendications 1 à 7, les étapes de réception, d'interprétation, de détermination et de délivrance en sortie étant exécutées uniquement lorsque l'utilisateur active un mode d'assistance prédéfini.

10. Procédé selon l'une des revendications 1 à 9, le procédé comprenant en outre les étapes suivantes :
- réception d'une instruction de saisie supplémentaire pour la sélection d'une instruction de mesure ou de commande jusque-là inconnue, qui est sélectionnée pour la première fois ;
- comparaison de l'instruction de mesure ou de commande jusque-là inconnue à la pluralité d'instructions de mesure ou de commande ;
- détermination d'une instruction de mesure ou de commande similaire parmi la pluralité d'instructions de mesure ou de commande, qui est similaire à l'instruction de mesure ou de commande jusque-là inconnue, sur la base de la comparaison ; et
- délivrance en sortie d'une proposition de paramètre de réglage (50) pour l'instruction de mesure ou de commande similaire.

11. Procédé selon l'une des revendications 1 à 9, le procédé comprenant en outre les étapes suivantes :
- réception d'une instruction de saisie supplémentaire pour la sélection d'une instruction de mesure ou de commande jusque-là inconnue, qui est sélectionnée pour la première fois ;
- comparaison de l'instruction de mesure ou de commande jusque-là inconnue à la pluralité d'instructions de mesure ou de commande ;
- détermination d'au moins deux instructions de mesure ou de commande similaires parmi la pluralité d'instructions de mesure ou de commande, qui sont similaires à l'instruction de mesure ou de commande jusque-là inconnue, sur la base de la comparaison ;
- interpolation entre les préréglages associés aux au moins deux instructions de mesure ou de commande similaires ; et
- délivrance en sortie d'une proposition de paramètre de réglage interpolée.

12. Produit de programme informatique comprenant un code de programme, qui est conçu pour que le dispositif selon l'une des revendications 13 et 14 mette en œuvre un procédé selon l'une des revendications 1 à 11.

13. Dispositif de commande d'un appareil de mesure dimensionnel et d'assistance d'un utilisateur lors de la création d'un plan de mesure pour une mesure à réaliser avec l'appareil de mesure (100) dimensionnel et/ou d'assistance d'un utilisateur pendant la mesure lors de la commande de la mesure à réaliser avec l'appareil de mesure (100) dimensionnel, le dispositif (200) possédant un afficheur (38) et une unité d'interprétation et de commande (34), l'unité d'interprétation et de commande (34) étant reliée à l'afficheur (38) par le biais d'une liaison de données et étant conçu pour :
- recevoir une pluralité de paramètres de réglage (42), qui sont sélectionnés par un utilisateur concernant une instruction de mesure ou de commande (40) parmi une pluralité d'instructions de mesure ou de commande pour la mesure à réaliser avec l'appareil de mesure (100) ;
- interpréter la pluralité de paramètres de réglage (42) sur la base d'une interprétation statistique et/ou d'une interprétation au moyen d'un apprentissage automatique ;
- déterminer un préréglage (46), par lequel au moins un paramètre de réglage (48) de la pluralité sélectionnée de paramètres de réglage (42) est affecté à l'instruction de mesure ou de commande (40) ; et
- délivrer en sortie une proposition de paramètre de réglage (50) en se basant sur le préréglage (46) déterminé lorsqu'une instruction de saisie destinée à la sélection de l'instruction de mesure ou de commande (40) est reçue.

14. Dispositif selon la revendication 13, le dispositif (200) conjointement avec des composants matériels et/ou logiciels supplémentaires étant compris dans un appareil de mesure (100), disposé sur celui-ci ou intégré dans celui-ci.
